# EUROPEAN PATENT APPLICATION

(11) **EP 2 990 672 A1**
(43) Date of publication of application: **02.03.2016**
(21) Application number: 14306331.1
(22) Date of filing: 29.08.2014
(51) Int. Cl.: F16C 33/60, F16C 33/62

(54) **Rolling bearing**

(71) Applicant: Aktiebolaget SKF, 415 50 Göteborg (SE)
(72) Inventor: Lepine, Thomas, 37510 Villandry (FR); Montboeuf, Bruno, 37390 Cercelles (FR); Jansen, Daniel, 37000 Tours (FR); Houart, Amandine, 41110 Saint Aignan du Cher (FR); Jullien, Tommy, 37100 Tours (FR); Bussit, Sylvain, 37380 Monnaie (FR)
(74) Representative: Myon, Gérard Jean-Pierre

(57) **Abstract**

This rolling bearing (1) comprises an outer ring (3) and an inner ring (5), both having a raceway (30, 32, 50, 52) for rolling elements (7) placed between said inner and outer rings (3, 5) in contact with said raceways. At least one (3) of the rings comprises an envelope (34) having an axial portion (340) and, connected to the edges of the axial portion (340), two radial portions (342, 344), and two half-raceways (30, 32) arranged in said envelope (34) to form the raceway of this ring (3). The half-raceways are made of a plastic material.

## Description

### TECHNICAL FIELD OF THE INVENTION

The invention relates to a rolling bearing, in particular a rolling bearing for use in a steering column of a motor vehicle.

### BACKGROUND OF THE INVENTION

Rolling bearings comprising at least one ring provided with two half-raceways, for example formed by toric wires, mounted in an envelope and pre-stressed by an elastic element are known from EP-B-1 956 254. Such rolling bearings are often used in steering columns to mitigate the effects of column misalignment.

Such rolling bearings imply friction and contacts between a relatively high number of metallic parts at each rotation, and therefore produce significant noise.

### SUMMARY OF THE INVENTION

The aim of the invention is to provide a new rolling bearing having a structure and materials which reduce noise emission.

To this end, the invention concerns a rolling bearing comprising an outer ring and an inner ring, both having a raceway for rolling elements placed between said inner and outer rings in contact with said raceways, at least one of the rings comprising an envelope having an axial portion and, connected to the edges of the axial portion, two radial portions, and two half-raceways arranged in said envelope to form the raceway of this ring. This rolling bearing is characterized in that the half-raceways are made of a plastic material.

Thanks to the invention, the plastic half-raceways reduce the noise generated by the rolling bearing. In particular, the use of a plastic material implies a damping of vibrations that occur in the rolling bearing, said vibrations coming from the exterior of rolling bearing and from the rolling of rolling elements onto said raceways.

Another advantage of plastic half-raceways is to permit a weight reduction of the bearing compared to standard rolling bearing equipped with metallic half-raceways.

According to further aspects of the invention which are advantageous but not compulsory, such a rolling bearing may incorporate one or several of the following features:
- At least one of the rings comprises a pre-stressing element arranged between the envelope and a contact surface of at least one of the half-raceways.
- The pre-stressing element is formed by a portion of at least one of the half-raceways.
- The or each half-raceway on which the pre-stressing element is formed comprises a protruding portion which is deformed against an inner surface of the envelope and in contact with the envelope.
- The or each half-raceway comprises an annular inner groove defining a deformable rim which is in contact with the envelope and which forms the protruding portion.
- In a free state, before the half-raceway is mounted in the envelope, the rim which forms the pre-stressing element extends axially, whereas the rim is then in a deformed state after being mounted against the envelope.
- At least one of the half-raceways comprises an elastic ring inserted in the inner groove and adapted to limit the deformation of the rim.
- The pre-stressing element is made of an elastic material and is over-molded onto one of the half-raceways.
- Each half-raceway is coupled to a dedicated pre-stressing element mounted between said half-raceway and the envelope.
- The pre-stressing element is made of a synthetic material.
- The pre-stressing element is made of rubber.
- The half-raceways of at least one of the rings of the bearing are formed by toroid rings.
- The half-raceways of at least one of the rings are formed by rings having a spherical contact surface which contacts the rolling elements.

### BRIEF DESCRIPTION OF THE DRAWINGS

The invention will now be explained in reference to the annexed figures, as an illustrative example. In the annexed figures:
- figure 1 is a partial sectional view of a rolling bearing according to a first embodiment of the invention;
- figure 2 is a view, at a larger scale, of detail II on figure 1;
- figure 3 is a partial sectional view of a rolling bearing according to a second embodiment of the invention.

### DETAILED DESCRIPTION OF SOME EMBODIMENTS

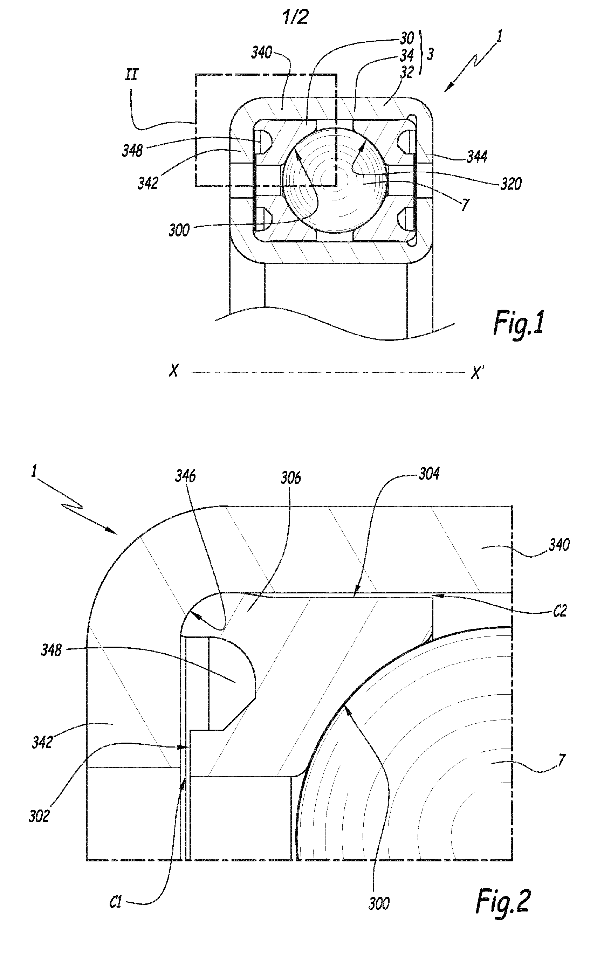

A rolling bearing 1 according to the invention is represented on figures 1 and 2. This rolling bearing 1 comprises an outer ring 3, an inner ring 5 and rolling elements, balls 7 in this example, which are placed between outer ring 3 and inner ring 5.

Each of outer ring 3 and inner ring 5 has raceways for balls 7. The raceway of outer ring 3 is formed by two half-raceways. In the example of figure 1, the half-raceways of outer ring 3 are formed by two rings 30 and 32, which have a respective spherical annular inner contact surface 300 and 320, which contacts balls 7.

Outer ring 3 comprises an envelope 34 in which rings 30 and 32 are arranged. Envelope 34 comprises an axial portion 340, which extends along a rotation axis X-X' of rolling bearing 1. Envelope 34 also comprises two radial portions 342 and 344 connected to the edges of axial portion 340, and which respectively face rings 30 and 32 along axis X-X'.

In this description, the adjectives "axial" and "radial" are used in reference to rotation axis X-X'.

According to the invention, the half raceways of outer ring 3 formed by rings 30 and 32 are made of a plastic material. Advantageously, the plastic material in which rings 30 and 32 are made is polyoxymethylene.

The plastic material has preferably a friction coefficient with steel inferior to 0.3.

The use of a plastic material to manufacture the half raceways reduces the emission of noise during operation of rolling bearing 1.

Outer ring 3 comprises at least one pre-stressing element, made of an elastic material, and arranged between envelope 34 and contact surfaces 300 and 320. In the example of figures 1 and 2, the pre-stressing element is formed by a portion of rings 30 and 32. As more precisely represented on figure 2, ring 30 comprises an axial surface 302 and a radial outer surface 304. Axial surface 302 axially faces radial portion 342, while radial surface 304 radially faces axial portion 340. An axial clearance C1 exists between axial surface 302 and radial portion 342, and a radial clearance C2 exists between radial surface 304 and axial portion 340. Ring 30 comprises an annular inner groove 348 which extends radially outwards from axial surface 302. Between axial surface 302 and radial surface 304, ring 30 comprises a protruding portion formed by a rim 306 defined by the outer side of groove 348. Rim 306 forms the pre-stressing element, and contacts envelope 34 at the intersection of axial portion 340 and radial portion 342. Protruding portion 306 is deformed against an inner surface 346 of envelope 34, and provides both an axial pre-stressing and a radial pre-stressing. Protruding portion 306 also provides damping against vibrations during operation of rolling bearing 1.

In a free state which occurs before ring 30 is mounted in envelope 34, rim 306 extends axially in the extension of radial surface 304. Rim 306 is then in a deformed state when mounted in envelope 34 against inner surface 346. In the deformed state, rim 306 exerts the pre-stressing and damps vibrations.

According to a non-shown embodiment, an elastic ring may be inserted in inner groove 348 to limit the deformation of rim 306. To this end, the elastic ring, which may have a toric shape and be made of a polymer material, exerts a radial outwards elastic force against rim 306 when the elastic ring is mounted and pre-stressed by an inwards radial force. This permits to avoid damage or breaking of the rim 306 under excessive inwards deformation. Such an elastic ring may be mounted on one or each half-raceways of bearing 1.

In the example of figures 1 and 2, ring 32 has the same structure as ring 30, and inner ring 5 comprises two half-raceways formed by two rings 50 and 52, which have the same structure as rings 30 and 32, mounted in an envelope 54 which has the same structure as envelope 34.

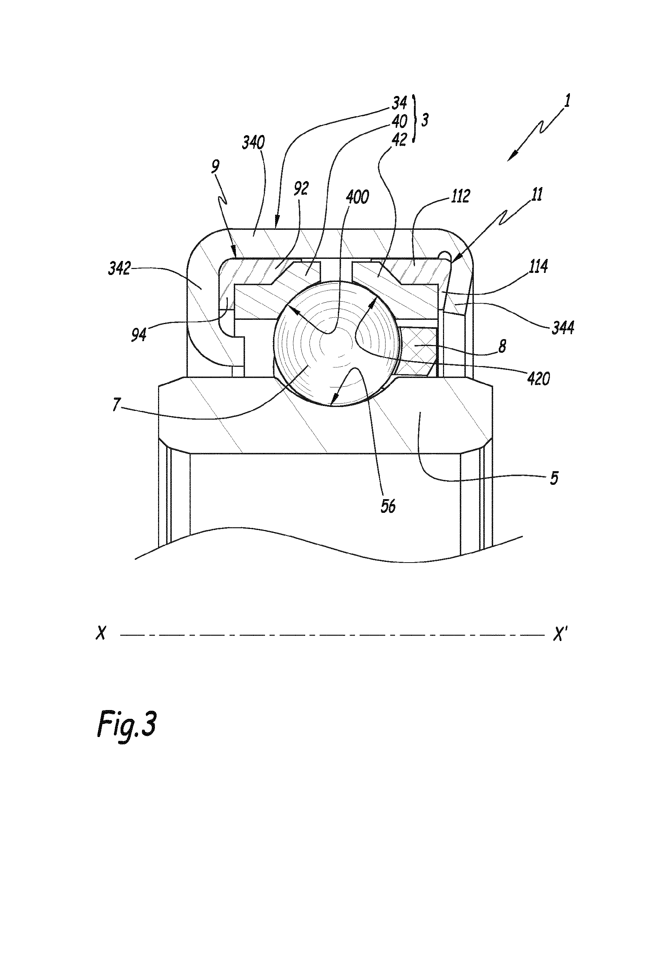

A second embodiment of the invention is represented on figure 3. In this embodiment, elements similar to those of the first embodiment have the same references and work in the same way. Only the differences from the first embodiment are detailed here-after.

In the embodiment of figure 3, inner ring 5 is massive and comprises a concave recess on an outer surface forming a raceway 56 for balls 7. The half-raceways of outer ring 3 are formed by two rings 40 and 42 having respective spherical contact surfaces 400 and 420. Balls 7 are arranged in a cage 8 which maintains balls 7 circumferentially equally spaced.

In the embodiment of figure 3, the pre-stressing element of outer ring 3 is formed by two dedicated parts 9 and 11 mounted respectively between ring 40 and envelope 34 and between ring 42 and envelope 34. Each one of pre-stressing elements 9 and 11 comprises respective axial portions 92 and 112 and respective radial portions 94 and 114 adapted respectively to provide a radial pre-stressing and an axial pre-stressing. Axial portions 92 and 112 are arranged between rings 40 and 42 and axial portion 340. Radial portion 94 is arranged between ring 40 and radial portion 342, and radial portion 114 is arranged between ring 42 and radial portion 344.

According to an optional feature, elements 9 and 11 may be over-moulded on rings 40 and 42.

In this embodiment, pre-stressing elements 9 and 11 may be made of a different material from half-raceways 40 and 42. Pre-stressing elements 9 and 11 are preferably made of a synthetic material, such as rubber.

In the example, pre-stressing elements 9 and 11 provide a radial and an axial pre-stressing. According to a non-shown embodiment of the invention, pre-stressing elements 9 and 11 may provide only a radial pre-stressing or only an axial pre-stressing.

According to another non-shown embodiment, outer ring 3 may comprise a unique pre-stressing element arranged between the half-raceways 40 and 42 and envelope 34.

According to another non-shown embodiment of the invention, the half-raceways of outer ring 3 and inner ring 5 may be formed by toric rings having a shape similar to the toric wires disclosed in EP-B-1 956 254.

According to another non-shown embodiment of the invention, the rolling elements of rolling bearing 1 may be, instead of balls 7, rollers or needles.

The technical features of the embodiments and variants described here-above may be combined to obtain new embodiments of the invention.

## Claims

1. Rolling bearing (1) comprising an outer ring (3) and an inner ring (5), both having a raceway (30, 32, 50, 52 ; 40, 42 ,56) for rolling elements (7) placed between said inner and outer rings (3, 5) in contact with said raceways, at least one (3) of the rings comprising:
- an envelope (34) having an axial portion (340) and, connected to the edges of the axial portion (340), two radial portions (342, 344), and
- two half-raceways (30, 32; 40, 42) arranged in said envelope (34) to form the raceway of this ring (3),
wherein the half-raceways are made of a plastic material.

2. Rolling bearing according to any preceding claim, wherein at least one of the rings comprises a pre-stressing element (306; 9, 11) arranged between the envelope (34) and a contact surface (300, 320; 400, 420) of at least one of the half-raceways (30, 32; 40, 42).

3. Rolling bearing according to claim 2, wherein the pre-stressing element is formed by a portion (306) of at least one (30) of the half-raceways.

4. Rolling bearing according to claim 3, wherein the or each half-raceway (30) on which the pre-stressing element is formed comprises a protruding portion (306) which is deformed against an inner surface (346) of the envelope (34) and in contact with the envelope (34).

5. Rolling bearing according to claim 4, wherein the or each half-raceway comprises an annular inner groove (348) defining a deformable rim (306) which is in contact with the envelope (34) and which forms the protruding portion.

6. Rolling bearing according to claim 5, wherein in a free state, before the half-raceway (30) is mounted in the envelope (34), the rim (306) which forms the pre-stressing element extends axially, and wherein the rim (306) is then in a deformed state after being mounted against the envelope.

7. Rolling bearing according to claim 4 or 5, wherein at least one of the half-raceways (30, 32) comprises an elastic ring inserted in the inner groove (348) and adapted to limit the deformation of the rim (306).

8. Rolling bearing according to claim 2, wherein the pre-stressing element (9, 11) is made of elastic material and over-molded onto one of the half-raceways (40, 42).

9. Rolling bearing according to claim 2, wherein each half-raceway (40, 42) is coupled to a dedicated pre-stressing element (9, 11) mounted between said half-raceway (40, 42) and the envelope (34).

10. Rolling bearing according to any preceding claim, wherein the half-raceways of at least one of the rings (3, 5) of the bearing (1) are formed by toroid rings.

11. Rolling bearing according to any of claims 1 to 9, wherein the half-raceways of at least one of the rings (3, 5) are formed by rings (30, 32, 50, 52; 40, 42) having a spherical contact surface (300, 320; 400, 420) which contacts the rolling elements (7).
